(19) Europäisches Patentamt
European Patent Office
Office européen des brevets

(11) EP 4 286 452 A1

(12) **EUROPEAN PATENT APPLICATION**

(43) Date of publication:
**06.12.2023 Bulletin 2023/49**

(21) Application number: **22176197.6**

(22) Date of filing: **30.05.2022**

(51) International Patent Classification (IPC):
***C08G 64/40*** *(2006.01)* ***C08J 3/28*** *(2006.01)*

(52) Cooperative Patent Classification (CPC):
**C08G 64/40; C08J 3/28;** C08J 2369/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro LLC**
**Pittsburgh, PA 15205-9741 (US)**

(72) Inventor: **The designation of the inventor has not yet been filed**

(74) Representative: **Levpat**
**c/o Covestro AG**
**Gebäude K12**
**51365 Leverkusen (DE)**

(54) **POLYCARBONATE DIAGNOSTIC COMPONENTS WITH REDUCED FLUORESCENCE**

(57) Provided is a process comprising irradiating a polycarbonate with gamma radiation at a dosage of at least 30 kGy, wherein the polycarbonate exhibits a decrease in fluorescence measured at excitation wavelengths of between 365 nm to 488 nm in comparison with the polycarbonate not so irradiated, and wherein the polycarbonate retains light transmission properties in the visible light range of 380 nm to 700 nm in comparison with the polycarbonate not so irradiated. Polycarbonates produced according to the inventive process show an unexpected decrease in fluorescence measured at excitation wavelengths of between 365 nm to 488 nm, while retaining excellent light transmission, which is important for microfluidic diagnostic applications, in the visible light range. Polycarbonate made according to the invention may provide improved molded polycarbonate diagnostic components, such as microfluidic chips and PCR trays.

EP 4 286 452 A1

## Description

### FIELD OF THE INVENTION

The present invention relates in general, to molded plastic parts and more specifically, to molded polycarbonate diagnostic components exhibiting reduced fluorescence.

### BACKGROUND OF THE INVENTION

As those skilled in the art are aware, fluorescence is a physical phenomenon in which incident light causes a material to re-emit light at a longer wavelength. The fluorescence behavior of several transparent plastics, which is an important consideration in selection of containment materials for diagnostic equipment components, such as microfluidic chips or polymerase chain reaction (PCR) trays is described by Piruska, et al. (A. Piruska, I. Nikcevic, S. H. Lee, C. Ahn, W. R. Heineman, P. A. Limbach, C. J. Seliskar, Lab Chip 5 (2005) 1348-1354). The principle behind many diagnostic tests is illumination of a test sample at a certain wavelength and determination of whether a pathogen, microbe, or certain biologic substance is present based on the sample exhibiting fluorescence and if so, how much. Although plastic is highly versatile for microfluidic chips and PCR trays, fluorescence from the plastic is undesirable because re-emitted light (fluorescence) can interfere with the intended diagnostic test and lead to erroneous measurements.

Useful commercially available plastics for microfluidics and PCR trays include cyclic-olefin copolymers (COC), polymethylmethacrylate (PMMA), and polystyrene (PS). Among other plastics, polycarbonate is a well-known material for producing microfluidic chips and PCR trays. Commercially available examples are known in the art. Microfluidic chips made from polycarbonate are described in U.S. Pat. Nos. 7,524,464; 7,976,795; 8,075,854; and 8,221,700.

According to Rufus et al., thermal degradation of polycarbonate caused from heat can result in significantly higher fluorescence emissions at 300-400 nm when excited with 290 nm light (I. B. Rufus, H. Shah, C. E. Hoyle, J. App. Polym. Sci., 51 (1994) 1549-1588). The results in presented in Table I of the instant disclosure for Comparative Examples A and B are consistent with this expected behavior of polycarbonate.

As shown by Itagaki, fluorescence in polycarbonate has been known for some time and may also result from the presence of impurities (H. Itagaki, J. Photopol. Sci. Tech. 6 (1993) 101-104).

Thus, according to the state-of-the-art, it is critical to minimize degradation of polycarbonate and to prepare parts with due care to avoid contaminants to minimize potential fluorescence in diagnostic applications.

### SUMMARY OF THE INVENTION

The present inventors have surprisingly found that the deliberate irradiation of polycarbonate with gamma radiation at a dosage of at least 30 kGy causes an unexpected decrease in fluorescence measured at excitation wavelengths between 365 nm to 488 nm, while retaining excellent light transmission, important for microfluidic diagnostic applications, in the visible light range.

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a). The various embodiments disclosed and described in this specification can comprise, consist of, or consist essentially of the features and characteristics as variously described herein.

Any patent, publication, or other disclosure material identified herein is incorporated by reference into this

specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

In a first embodiment, the present invention is directed to a process comprising irradiating a polycarbonate with gamma radiation at a dosage of at least 30 kGy, wherein the polycarbonate exhibits a decrease in fluorescence measured at excitation wavelengths of between 365 nm to 488 nm in comparison with the polycarbonate not so irradiated, and wherein the polycarbonate retains light transmission properties in the visible light range of 380 nm to 700 nm in comparison with the polycarbonate not so irradiated.

In a second embodiment, the present invention is directed to molded polycarbonate diagnostic components such as a microfluidic chip or a PCR tray made from the polycarbonate according to the previous paragraph.

In various embodiments of the present invention, the thermoplastic compositions comprise A) 50 to 98.5 wt.% of an aromatic polycarbonate, B) 0.1 to 2 wt.% of a polyether polyol, and optionally C) additives.

In certain embodiments, the thermoplastic compositions comprise A) 69.85 wt.% to 98.5 wt.% of an aromatic polycarbonate, B) 0.1 wt.% to 2 wt.% of a polyether polyol and optionally, C) up to 30 wt.% of at least one additive selected from the group consisting of flame retardants, antidripping agents, impact modifiers, fillers, antistats, coloring agents, pigments, thermal stabilizers different from component B, lubricants and/or demolding agents, UV absorbers, IR absorbers, hydrolysis stabilizers, and compatibilizers.

In selected embodiments the thermoplastic compositions comprise A) 93.0 wt.% to 97.5 wt.% of an aromatic polycarbonate, B) 0.5 wt.% to 1 wt.% of a polyether polyol and optionally, C) up to 6 wt.% of at least one additive selected from the group consisting of flame retardants, antidripping agents, impact modifiers, fillers, antistats, coloring agents, pigments, thermal stabilizers different from components B, lubricants and/or demolding agents, UV absorbers, IR absorbers, hydrolysis stabilizers, and compatibilizers.

**Component A**

According to the invention, "polycarbonate" is to be understood as meaning both homopolycarbonates and copolycarbonates, in particular, polycarbonates. These polycarbonates may be linear or branched in known fashion. According to the invention, mixtures of polycarbonates may also be used.

A portion of up to 80 mol%, preferably of 20 mol% up to 50 mol%, of the carbonate groups in the polycarbonates used in accordance with the invention may be replaced by aromatic dicarboxylic ester groups. Polycarbonates of this kind, incorporating both acid radicals from the carbonic acid and acid radicals from aromatic dicarboxylic acids in the molecule chain, are referred to as "aromatic polyestercarbonates." In the context of the present invention, they are encompassed by the umbrella term of the thermoplastic aromatic polycarbonates. The replacement of the carbonate groups by aromatic dicarboxylic acid ester groups takes place essentially stoichiometrically and quantitatively, so that the molar ratio of the reaction partners can also be found in the finished polyestercarbonate. The incorporation of dicarboxylic acid ester groups can be statistical as well as in blocks.

The thermoplastic polycarbonates, including the thermoplastic aromatic polyestercarbonates, have weight average molecular weights $M_w$, determined by gel permeation chromatography under use of $CH_2Cl_2$ as diluent, of from

10,000 g/mol to 35,000 g/mol, preferably from 12,000 g/mol to 32,000 g/mol, more preferably from 15,000 g/ mol to 32,000 g/mol, in particular from 20,000 g/mol to 31,500 g/mol, calibration with linear polycarbonate (made from bisphenol A and phosgene) of known molecular weight distribution, standards from PSS Polymer Standards Service GmbH, Germany, calibration according to method 2301-0257502-09D (from the year 2009 in German language) from Currenta GmbH & Co. OHG, Leverkusen. Diluent methylene chloride. Column combination from cross-linked styrene-divinylbenzene resin. Diameter of the analytical columns: 7.5 mm, length: 300 mm. Particle size of the column material: 3 μm to 20 μm. Concentration of the solutions: 0.2 wt.-%. Flow rate: 1.0 ml/min, temperature of the solution: 30°C. Detection by means of a refractive index(RI)-detector.

Details regarding the preparation of polycarbonates are disclosed in many patent documents spanning approximately the last 40 years. Reference may be made here to Schnell, "Chemistry and Physics of Polycarbonates", Polymer Reviews, Volume 9, Interscience Publishers, New York, London, Sydney 1964, to D. Freitag, U. Grigo, P.R. Müller, H. Nouvertné, BAYER AG, "Polycarbonates" in Encyclopedia of Polymer Science and Engineering, Volume 11, Second Edition, 1988, pages 648-718 and finally to U. Grigo, K. Kirchner and P.R. Müller "Polycarbonate" [Polycarbonates] in Becker/Braun, Kunststoff-Handbuch [Plastics Handbook], volume 3/1, Polycarbonate, Polyacetale, Polyester, Celluloseester [Polycarbonates, Polyacetals, Polyesters, Cellulose Esters], Carl Hanser Verlag Munich, Vienna 1992, pages 117-299.

Various processes for the production of the polycarbonates, useful in the invention, including polyestercarbonates, are the interfacial process and the melt transesterification process (e.g., U.S. Pat. Nos. 5,097,002; 5,340,905; 5,717,057; 6,596,840; 6,740,730; and 7,071,284).

Aromatic polycarbonates are prepared, for example, by reaction of dihydroxyaryl compounds with carbonyl halides, preferably phosgene, and/or with aromatic dicarbonyl dihalides, preferably benzenedicarbonyl dihalides, by the interfacial process, optionally with use of chain terminators and optionally with use of trifunctional or more than trifunctional branching agents, wherein for the production of polyestercarbonates a part of the carbonic acid derivatives is replaced with aromatic dicarboxylic acids or derivatives of dicarboxylic acids, namely according to the carbonate structure units in the aromatic polycarbonates by dicarboxylic acid ester structure units. Preparation via a melt polymerization process by reaction of dihydroxyaryl compounds with, for example, diphenyl carbonate is likewise possible.

Dihydroxyaryl compounds suitable for the preparation of polycarbonates are those of the formula (1)

HO-Z-OH (1),

wherein,

Z is an aromatic radical of 6 to 30 carbon atoms which may contain one or more aromatic rings, may be substituted and may contain aliphatic, cycloaliphatic radicals, alkylaryl groups, or heteroatoms as bridging elements.

Preferably, Z in formula (1) is a radical of the formula (2)

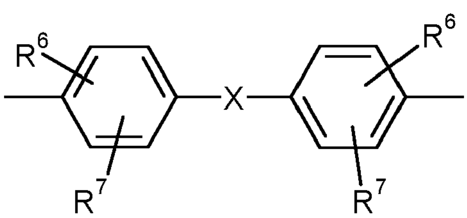

(2),

wherein

$R^6$ and $R^7$ are each independently H, $C_1$-$C_{18}$-alkyl-, $C_1$-$C_{18}$-alkoxy, halogen such as Cl or Br or in each case optionally substituted aryl or aralkyl, in some embodiments H or $C_1$-$C_{12}$-alkyl, in certain embodiments H or Ci-Cs-alkyl and in selected embodiments H or methyl, and

X is a single bond, -$SO_2$-, -CO-, -O-, -S-, $C_1$-$C_6$-alkylene, $C_2$-$C_5$-alkylidene or $C_5$-$C_6$-cycloalkylidene which may be substituted by $C_1$-$C_6$-alkyl, preferably methyl or ethyl, or else $C_6$-$C_{12}$-arylene which may optionally be fused to further aromatic rings containing heteroatoms.

In various embodiments, X is a single bond, $C_1$-$C_5$-alkylene, $C_2$-$C_5$-alkylidene, $C_5$-$C_6$-cycloalkylidene, -O-, -SO-, -CO-, -S-, -$SO_2$- or a radical of the formula (2a)

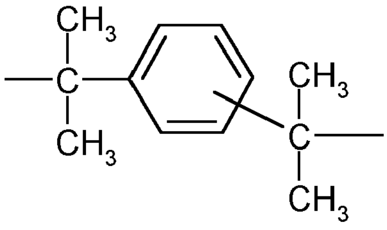

(2a).

Examples of dihydroxyaryl compounds suitable for the preparation of the polycarbonates for use in accordance with the invention include, but are not limited to, hydroquinone, resorcinol, dihydroxydiphenyl, bis(hydroxyphenyl)alkanes, bis(hydroxyphenyl)cycloalkanes, bis(hydroxyphenyl) sulphides, bis(hydroxyphenyl) ethers, bis(hydroxyphenyl) ketones, bis(hydroxyphenyl) sulphones, bis(hydroxyphenyl) sulphoxides, $\alpha,\alpha'$-bis(hydroxyphenyl)diisopropylbenzenes and the alkylated, ring-alkylated and ring-halogenated compounds thereof.

Useful dihydroxyaryl compounds are 4,4'-dihydroxydiphenyl, 2,2-bis(4-hydroxyphenyl)propane (bisphenol A), 2,4-bis(4-hydroxyphenyl)-2-methylbutane, dimethyl-bisphenol A, 1,1-bis(4-hydroxyphenyl)-p-diisopropylbenzene, 2,2-bis(3-methyl-4-hydroxyphenyl)propane, 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)-p-diisopropylbenzene and 1,1-bis(4-hydroxyphenyl)-3,3,5-trimethylcyclohexane, and bisphenols (I) to (III)

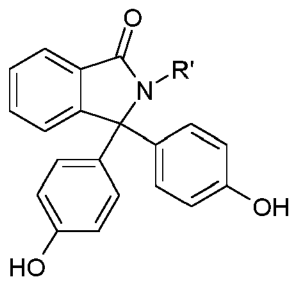

(I)

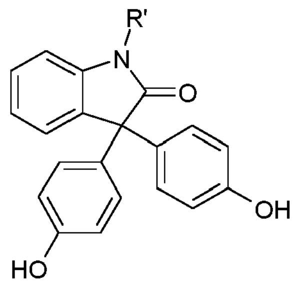

(II)

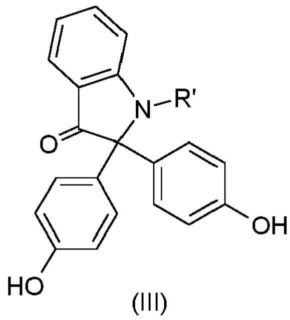

(III)

,

R' in each case is $C_1$-$C_4$-alkyl, aralkyl or aryl, in certain embodiments, methyl or phenyl, in selected embodiments, methyl.

In certain embodiments, the dihydroxyaryl compounds include 2,2-bis-(4-hydroxyphenyl)-propane (bisphenol A), 2,2-bis(3,5-dimethyl-4-hydroxyphenyl)propane, 1,1-bis(4-hydroxyphenyl)cyclohexane and 1,1-bis(4-hydroxyphenyl)-3,3,5-trimethylcyclohexane (bisphenol TMC) and dimethyl-bisphenol A as well as the dihydroxyaryl compounds of formula (I), (II) and (III).

These and further suitable dihydroxyaryl compounds are described, for example, in U.S. Pat. Nos. 2,991,273; 2,999,835; 2,999,846; 3,148,172; 3,271,367; 4,982,014; DE 2 036 052 A, and DE 3 832 396 A; in French patent application 1 561 518 A1; GB1122003; GB1229482; GB1341318; GB1367790; in the monograph, H. Schnell, Chemistry and Physics of Polycarbonates, Interscience Publishers, New York 1964, p. 28 ff.; p.102 ff., and in D.G. Legrand, J.T. Bendler, Handbook of Polycarbonate Science and Technology, Marcel Dekker New York 2000, p. 72ff.

Only one dihydroxyaryl compound is used in the case of the homopolycarbonates; two or more dihydroxyaryl compounds are used in the case of copolycarbonates. The dihydroxyaryl compounds employed - as well as components of the compositions according to the invention- , similarly to all other chemicals and assistants added to the synthesis, may be contaminated with the contaminants from their own synthesis, handling, and storage. However, it is desirable to employ the purest possible raw materials.

Examples of suitable carbonic acid derivatives include phosgene and diphenyl carbonate.

Suitable chain terminators useful in the production of polycarbonates are monophenols. Suitable monophenols include, for example, phenol itself, alkylphenols such as cresols, p-tert-butylphenol, cumylphenol, and mixtures thereof.

In various embodiments, the chain terminators include phenols mono- or polysubstituted by linear or branched $C_1$-$C_{30}$-alkyl radicals, unsubstituted or substituted by tert-butyl. In selected embodiments, the chain terminators are phenol, cumylphenol and p-tert-butylphenol. The amount of chain terminator to be used may be 0.1 to 5 mol%, based on moles of dihydroxyaryl compounds used in each case. The chain terminators can be added before, during or after the reaction with a carbonic acid derivative.

Suitable branching agents include trifunctional or more than trifunctional compounds familiar in polycarbonate

chemistry, particularly those having three or more than three phenolic OH groups. Examples of suitable branching agents include, but are not limited to, 1,3,5-tri(4-hydroxyphenyl)benzene, 1,1,1-tri(4-hydroxyphenyl)ethane, tri(4-hydroxyphenyl)phenylmethane, 2,4-bis(4-hydroxyphenylisopropyl)phenol, 2,6-bis(2-hydroxy-5'-methylbenzyl)-4-methylphenol, 2-(4-hydroxyphenyl)-2-(2,4-dihydroxyphenyl)propane, tetra(4-hydroxyphenyl)methane, tetra(4-(4-hydroxyphenylisopropyl)phenoxy)methane and 1,4-bis((4',4"-dihydroxytriphenyl)methyl)benzene and 3,3-bis(3-methyl-4-hydroxyphenyl)-2-oxo-2,3-dihydroindole. The amount of any branching agents to be used may be 0.05 mol% to 2 mol%, based on moles of dihydroxy aryl compounds used in each case. The branching agents can either be initially charged together with the dihydroxyaryl compounds and the chain terminators in the aqueous alkaline phase or added dissolved in an organic solvent before the phosgenation. In the case of the transesterification process, the branching agents are used together with the dihydroxyaryl compounds.

In various embodiments, the polycarbonates are homopolycarbonate based on bisphenol A, homopolycarbonate based on 1,3-bis(4-hydroxyphenyl)-3,3,5-trimethylcyclohexane and copolycarbonates based on the two monomers bisphenol A and 1,1-bis(4-hydroxyphenyl)-3,3,5-trimethylcyclohexane, and homo- or copolycarbonates derived from the dihydroxyaryl compounds of the formulae (I) to (III),

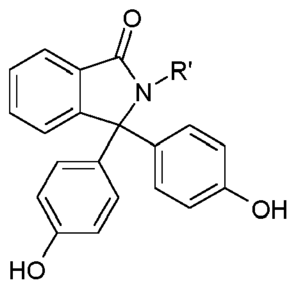
(I)

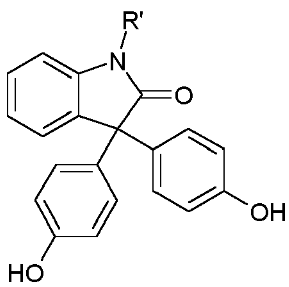
(II)

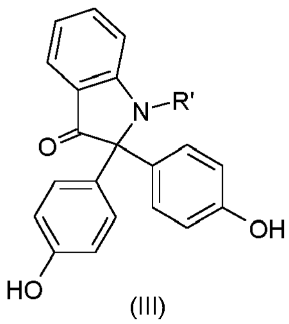
(III)
,

wherein R' in each case is $C_1$-$C_4$-alkyl, aralkyl or aryl, in certain embodiments methyl or phenyl, in selected embodiments methyl, and in particular embodiments with bisphenol A as comonomer.

To facilitate incorporation of additives, component A may be used in the form of powders, pellets or mixtures thereof.

In various embodiments, the polycarbonate has an MVR of from 4.5 to 34 $cm^3$/(10 min), in certain embodiments of from 5.5 to 12 $cm^3$/(10 min), in selected embodiments of from 6 to 10 $cm^3$/(10 min), determined according to ISO 1133:2012-03 at a test temperature of 300 °C and 1.2 kg load.

A mixture of different polycarbonates may be used as polycarbonate, for example a mixture of the polycarbonates A1 and A2, wherein A2 is a polycarbonate in powdered form. As used herein, the properties for the polycarbonate refer to a respective mixture.

In various embodiments of the invention, the compositions contain 50 to 98.5 wt.%, in some embodiments, 69.85 to 98.0 wt.%, in certain embodiments 85 to 97.5 wt.%, in selected embodiments 90.0 to 97.5 wt.%, and in particular embodiments, 93.0 wt.% to 97.5 wt.% of the aromatic polycarbonate.

**Component B**

Component B comprises one or more stabilizers in the form of a polyether polyol. As those skilled in the art are aware, polyether polyols are the product of the polymerization of epoxides, such as ethylene oxide (EO), propylene oxide (PO), butylene oxide, styrene oxide, and epichlorohydrin, with themselves or by addition of such epoxides, optionally in admixture or sequentially, to starting components with reactive hydrogen atoms, such as water, alcohol, ammonia or amines. Such "starter molecules" usually have a functionality of from 1 to 6. Depending on the process control, such polyether polyols may be homopolymers, block copolymers, random copolymers, capped polymers, or polymers tipped with a mixture of different epoxides.

To specify such polyether polyols, various characteristics have become established in the art:

i) hydroxyl functionality, which depends on the starter molecule starting from which the polyether polyol is synthesized,
ii) hydroxyl or OH number, which is a measure of the content of hydroxyl groups stated in mg of KOH/g, determined according to DIN 53240-3:2016-03,
iii) when epoxides in which the ring opening causes the formation of different, i.e., primary or secondary) hydroxyl groups are used, on the one hand, the proportion of the respective epoxides in the polyether polyol is stated, and on the other hand, the proportion of primary or secondary hydroxyl groups based on the total number of hydroxyl

groups present in the polyether polyol is stated, and

iv) the molecular weight ($M_n$ or $M_w$), which is a measure of the length of the polyoxyalkylene chains of the polyether polyols.

In various embodiments of the invention polyether polyols have a number average molecular weight $M_n$ of from 100 to 6200 g/mol, in certain embodiments from 1500 to 4000 g/mol, and in selected embodiments from 1800 to 3000 g/mol.

$M_n$ is calculated according to the following formula:

$$M_n = 56100*F/OHN.$$

OH-number (OHN) is determined via hydroxyl end group titration as per DIN 53240-3:2016-03. OHN in mg KOH/g is inserted in the given formula. F is the functionality, which in the context of this invention related to hydroxyl end groups. Acid end groups, if any, are not taken into account. F is defined as number of hydroxyl end groups, divided by the number of molecules in an ensemble, meaning F is the average number of hydroxyl end groups of a molecule of a compound. F is normally apparent from the recipe for preparing the polyol but may alternatively be determined by $^1$H NMR

In various embodiments, the polyether polyols may be formed from repeating ethylene oxide and propylene oxide units, e.g., with a share of 35 to 100 wt.% propylene oxide units, in certain embodiments 50 to 100 wt.% propylene oxide units. The copolymers may be statistical copolymers, gradient copolymers, alternating copolymers or block copolymers formed from ethylene oxide and propylene oxide. In selected embodiments, the polyether polyols are linear polymers.

Useful polyether polyols are those formed from repeating propylene oxide units with a 1,2-diol as starter molecule, more preferably with propylene glycol as the starter molecule. The polyether polyols may be end-capped. In selected embodiments, the polyether polyol is end capped. A preferred agent for end-capping is dihydropyran (3,4-dihydro-2H-pyran).

Suitable polyether polyols, formed from repeating propylene oxide and/or ethylene oxide units are, e.g., DESMOPHEN, ACCLAIM, ARCOL, BAYCOLL, BAYFILL, BAYFLEX, BAYGAL, PET, POLYETHER polyols from Covestro Deutschland AG (for example DESMOPHEN 3600Z, DESMOPHEN 1900U, ACCLAIM Polyol 2200, ACCLAIM Polyol 40001, ARCOL Polyol 1004, ARCOL Polyol 1010, ARCOL Polyol 1030, ARCOL Polyol 1070, BAYCOLL BD 1110, BAYFILL VPPU 0789, BAYGAL K55, PET 1004, POLYETHER S180). Further suitable homo-polyethylene oxides are, for example, the PLURIOL E polyols from BASF SE. Suitable homo-propylene oxides are, for example, PLURIOL P polyols from BASF SE or MULTRANOL polyols from Covestro Deutschland AG, SYNALOX polyols from The Dow Chemical Company and CARADOL polyols from Shell Chemicals. Suitable mixed copolymers formed from ethylene oxide and propylene oxide are, for example, the PLURONIC PE or PLURIOL RPE polyols from BASF SE.

In certain embodiments, the polyether polyols are those formed from repeating propylene oxide units with propylene glycol as starter molecule, an OH number within a range of from 50 to 70 mg KOH/g determined according to DIN 53240-3:2016-03, and having a hydroxyl functionality of 2, a proportion of primary hydroxyl groups within a range of from 0 to 3 %, based on the total number of primary and secondary hydroxyl groups, having a propylene oxide content of at least 95 wt.% and ethylene oxide content of up to 3 wt.%, in selected embodiments, those without any ethylene oxide units, but only with propylene oxide units.

The compositions according to the invention may comprise polyether polyols in various embodiments in an amount of from 0.1 to 5 wt.%, in certain embodiments, 0.1 to 2 wt.%, in selected embodiments, 0.5 to 1 wt.%, and in particular embodiments, 0.5 to 1.0 wt.%, wherein all wt.% refers to the weight of the composition.

**Component C**

The compositions according to the invention optionally may comprise additives known to those in the art, including, but not limited to, flame retardants, antidripping agents, impact modifiers, fillers, antistats, coloring agents, pigments, thermal stabilizers different from component B, lubricants, demolding agents, UV absorbers, IR absorbers, hydrolysis stabilizers, and compatibilizers.

Such additives as typically added in the case of polycarbonates are described in U.S. Pat. Nos. 5,288,778; 5,821,380; and 5,883,165 and in "Plastics Additives Handbook", Hans Zweifel, 5th Edition 2000, Hanser Verlag, Munich.

The amount of such additives in various embodiments is up to 30 wt.%, in some embodiments up to 10 wt.%, in certain embodiments up to 6 wt.%, in selected embodiments 0.01 to 3 wt.%, and in particular embodiments 1 wt.%, with all values referring to the composition and all including the upper value.

Useful demolding agents include, but are not limited to, pentaerythrityl tetrastearate (PETS), glycerine monostearate (GMS), their carbonates, and mixtures of any of these.

In various embodiments, up to 0.1 wt.%, in some embodiments, 0.0001 wt.% to 0.001 wt.%, in certain embodiments, 0.0004 wt.% to 0.001 wt.%, of one or more coloring agents are used as additive. The amount "to 0.001 wt.% of one or more coloring agents" means that up to 0.001 wt.% (inclusive) of coloring agents in total are included. If it is a mixture of two or more coloring agents, the upper limit for the mixture of coloring agents is 0.001 wt.%. Coloring agents may be included to improve the visual impression if it is intended to compensate for a minimum discoloration after irradiation, if present. It is however also possible to use compositions without any coloring agents. It is also possible to use even more coloring agents.

Coloring agents or pigments in the context of the present invention include, e.g. sulfur-containing pigments as cadmium red or cadmium yellow, iron cyanide-based pigments as Prussian Blue, oxide pigments as titan dioxide, zinc oxide, red iron oxide, black iron oxide, chromium oxide, titanium yellow, zinc-iron-based brown, titan-cobalt-based green, cobalt blue, copper-chromium-based black, copper-iron-based black or chromium-based pigments as chromium yellow, phthalocyanine-based coloring agents as copper-phthalocyanine blue or copper-phthalocyanine green, condensed polycyclic coloring agents and pigments as azo-based ones (for example nickel-azo-yellow), sulfur-indigo coloring agents, perinone-based, perylene-based, quinacridone-based, dioxazine-based, isoindolinone-based, and quinophthalone-based derivatives, anthraquinone-based, heterocyclic systems.

Specific examples for coloring agents include, but are not limited to, commercial products as MACROLEX Blue RR, MACROLEX Violet 3R, MACROLEXRed EG, MACROLEX Violet B (Lanxess AG, Germany), SUMIPLAST Violet RR, SUMIPLAST Violet B, SUMIPLAST Blue OR, (Sumitomo Chemical Co., Ltd.), DIARESIN Violet D, DIARESIN Blue G, DIARESIN Blue N (Mitsubishi Chemical Corporation), HELIOGEN Blue and HELIOGEN Green (BASF AG, Germany). Further suitable coloring agents are, e.g., AMAPLAST Yellow GHS (CAS 13676-91-0; SOLVENT YELLOW 163; C.I. 58840); KEYPLAST Blue KR (CAS 116-75-6; SOLVENT BLUE 104; C.I. 61568), HELIOGEN BLUE types (e.g. HELIOGEN BLUE K 6911; CAS 147-14-8; PIGMENT BLUE 15:1; C.I. 74160) as well as HELIOGEN GREEN types (as e.g. HELIOGEN GREEN K 8730; CAS 1328-53-6; PIGMENT GREEN 7; C.I. 74260). Cyanine-, quinolone-, anthraquinone-, phthalocyanine-derivatives may be particularly useful.

Suitable pigments include, but are not limited to, titan dioxide, talc, wollastonite, and mica. Carbon black may be a suitable pigment in various embodiments, although, where carbon black is used, the amount is very low, i.e., only up to < 0.1 wt.%, to avoid any effect of coloring by carbon black.

In certain embodiments of the invention, compositions may be used that contain blue and/or violet coloring agents to partially compensate for the visual yellow color impression which is a consequence of damage by irradiation. In combination with the stabilizer combination according to the invention, this gives the least colored ready-to-use articles.

Optionally, the composition may comprise a UV absorber. Various UV absorbers are those having as low a transmission as possible below 400 nm and as high a transmission as possible above 400 nm. Such UV absorbers are known in the art and described in U.S. Pat. Nos. 5,288,778; 5,821,380; and 5,883,165. Ultraviolet absorbers particularly suitable for use in the composition according to the invention are selected from benzotriazoles, triazines, benzophenones, and arylated cyanoacrylates.

Particularly suitable ultraviolet absorbers are hydroxybenzotriazoles, such as 2-(3',5'-bis(1,1-dimethylbenzyl)-2'-hydroxyphenyl)benzotriazole (TINUVIN 234, BASF), 2-(2'-hydroxy-5'-(tert-octyl)phenyl)benzotriazole (TINUVIN 329, BASF), bis(3-(2H-benzotriazolyl)-2-hydroxy-5-tert-octyl)methane (TINUVIN 360, BASF), 2-(4,6-diphenyl-1,3,5-triazin-2-yl)-5-(hexyloxy)phenol (TINUVIN 1577, BASF), and also benzophenones such as 2,4-dihydroxybenzophenone (CHIMASSORB 22, BASF) and 2-hydroxy-4-(octyloxy)benzophenone (CHIMASSORB 81, BASF), 2,2-bis[[(2-cyano-1-oxo-3,3-diphenyl-2-propenyl)oxy]methyl]-1,3-propanediyl ester (9CI) (UVINUL 3030, BASF AG), 2-[2-hydroxy-4-(2-ethylhexyl)oxy]phenyl-4,6-di(4-phenyl)phenyl-1,3,5-triazine (TINUVIN 1600, BASF,), tetraethyl-2,2'-(1,4-phenylenedimethylidene) bismalonate (HOSTAVIN B-Cap, Clariant) or N-(2-ethoxyphenyl)-N'-(2-ethylphenyl)ethanediamide (TINUVIN 312, CAS No. 23949-66-8, BASF). Particularly preferred specific UV absorbers are TINUVIN 360, TINUVIN 329 and/or TINUVIN 312, very particular preference being given to TINUVIN 329 and TINUVIN 312. It is also possible to employ mixtures of these ultraviolet absorbers.

Suitable IR absorbers are described, in a variety of patents including U.S. Pat. Nos. 7,074,351; 7,169,834; 8,153,239; and in U.S. Pat. Pub. 2005/0165148. Of those mentioned in the literature, boride- and/or tungstate-based IR absorbers, in particular, cesium tungstate or zinc-doped cesium tungstate, as well as ITO- or ATO-based IR absorbers and combinations thereof are particularly useful.

Suitable impact modifiers are core-shell type impact modifiers, including, but not limited to, ABS, MBS, acryl-based, silicone-acryl-based impact modifiers, and non-core-shell type impact modifiers.

The polycarbonate compositions according to the invention may comprise organic and inorganic fillers in the usual amounts. Suitable fillers include, but are not limited to, chalk, quartz powder, titanium dioxide, silicates, aluminosilicates, e.g., talc, wollastonite, montmorillonite, also modified by ion exchange, kaolin, zeolite, vermiculite, aluminium oxide, and silica. Mixtures of these or these and other fillers may also be used.

Polytetrafluoroethylene may be used as an antidripping agent.

Sulfur-containing stabilizers may be used including, but not limited to, 3,3'-thiodipropionic, distearyl disulfide (HOSTANOX SE 10, Clariant), pentaerythrityl tetrakis(3-laurylthiopropionate) (SOGNOX 4120, Songwon International AG) and bis-(phenylsulfonyl)methane.

The polymer compositions according to the invention, comprising components A, B, and optionally C, are produced by standard incorporation processes via combination, mixing and homogenization of the individual constituents, especially with the homogenization taking place in the melt under the action of shear forces. If appropriate, combination and mixing prior to the melt homogenization occurs using powder premixes. For all components used, it is desirable to employ the purest possible compounds.

Some embodiments may use premixes of granules or granules and powders with components B and optionally C. Other embodiments may use premixes which have been produced from solutions of the mixture components in suitable solvents, in which case homogenization is optionally effected in solution and the solvent is removed.

It is possible to introduce components B and optionally C into the polycarbonate by known methods or as a masterbatch. The use of masterbatches is in selected embodiments used for incorporation of component C in masterbatches.

In this context, the composition according to the invention may be combined, mixed, homogenized and subsequently extruded in customary apparatus such as screw extruders (TSE twin-screw extruders for example), kneaders or BRABENDER or BANBURY mills. In these embodiments, the extrudate may be cooled and comminuted after extrusion. It is also possible to premix individual components and to add the remaining starting materials individually and/or likewise in a mixture.

It is possible in various embodiments of the invention to combine and mix a premix in the melt in the plastifying unit of an injection-molding machine. In these embodiments, the melt is converted directly to a shaped body in the subsequent step.

The manufacture of the molded parts from the compositions according to the invention in various embodiments may be accomplished by injection-molding, extrusion, or rapid-heat cycle molding.

The compositions according to the invention are useful for the manufacture of injection-molded parts or extrudates. Injection-molded parts and extrudates are understood as being molded polycarbonate diagnostic components according to the invention.

The molded polycarbonate diagnostic components according to the invention include PCR trays, and microfluidic chips. The molded polycarbonate diagnostic components can be those intended for single use as well as those intended for multiple use. To avoid contamination, it is necessary to also package such components under sterile conditions. Molded polycarbonate diagnostic components made from the compositions according to the invention can be packaged airtight, sterilized by gamma irradiation, and be transported to their place of use where the packagings, such as foil pouches, may opened immediately before use of the components.

Gamma radiation is preferably used for radiation sterilization of the molded polycarbonate diagnostic components made from the compositions according to the invention. The radiation dose is at least 30 kGy, although sterilization treatments of up to 100 kGy are acceptable.

**Microfluidic chips and PCR trays**

Those skilled in the art are familiar with methods and techniques for producing and using microfluidic chips. Such molded polycarbonate diagnostic components are described e.g., in U.S. Pat. Nos. 7,524,464; 7,976,795; 8,075,854; and 8,221,700; in Scott, S.M.; Ali, Z., "Fabrication Methods for Microfluidic Devices: An Overview", Micromachines 2021, 12, 319. https://doi.org/10.3390/mi12030319; and in "Materials for microfluidic chips fabrication _ a review 2017 - Elveflow", found at: https://www.elveflow.com/microfluidic-reviews/general-microfluidics/materials-for-microfluidic-chips-fabrication-a-review-2017/.

Likewise, those skilled in the art are familiar with methods and techniques for producing and using PCR trays. Such molded polycarbonate diagnostic components are described e.g., in U.S. Pat. Nos. 8,716,007; 8,831,887; 10,280,392; 10,436,713; and 11,235,333.

## EXAMPLES

The non-limiting and non-exhaustive examples that follow are intended to further describe various non-limiting and non-exhaustive embodiments without restricting the scope of the embodiments described in this specification. All quantities given in "parts" and "percents" are understood to be by weight, unless otherwise indicated.

The following materials were used in preparation of the Examples:

POLYCARBONATE A — a medium viscosity polycarbonate with a melt volume-flow rate MVR (300 °C/1.2 kg) of 15 $cm^3$/10 min, suitable for sterilization with high-energy radiation, biocompatible according to

| | |
|---|---|
| | many ISO 10993-1 test requirements, useful for transparent parts of medical devices, commercially available from Covestro as MAKROLON Rx2530 451118; and |
| POLYCARBONATE B | a medium/low viscosity polycarbonate (MVR 19 cm3/10 min) with good release characteristics, suitable for EtO sterilization and steam sterilization at 121°C, biocompatible according to certain ISO 10993-1 test requirements, commercially available from Covestro as MAKROLON 2458 550115. |

**Fluorescence Measurement**

Relative fluorescence measurements were completed with a SHIMADZU RF5301-PC FLUORESCENCE SPECTROPHOTOMETER. Each sample was irradiated with specific excitation wavelengths, and the fluorescence was measured in the appropriate emission ranges. For example, for the 365 nm excitation, 390 nm to 700 nm was used for the emission range; for the 488 nm excitation, 515 nm to 700 nm was used for the emission range. Each excitation/emission range measurement included the appropriate filter(s) to remove artifactual fluorescence activity. Each fluorescence emission spectrum was integrated over the entire range to obtain the relative fluorescence intensities of the samples.

**Comparative Example A**

Commercially available radiation-stabilized POLYCARBONATE A was injection-molded into plaques of 2 in. × 3 in. × 0.125 in. (5.08 cm × 7.62 cm × 3.18 mm) by following standard practice for converting plastic pellets into molded articles.

**Comparative Example B**

Commercially available radiation-stabilized POLYCARBONATE A was fed into a twin-screw extruder and pelletized, whereby the material in this example is subjected to more extensive heat-history and is therefore expected to exhibit more fluorescence due to greater occurrence of degradation products. The pelletized material was injection-molded into plaques of 2 in. × 3 in. × 0.125 in. (5.08 cm × 7.62 cm × 3.18 mm) by following standard practice for converting plastic pellets into molded articles.

**Example 1**

Commercially available radiation-stabilized POLYCARBONATE A was fed into a twin-screw extruder and pelletized. Therefore, the polycarbonate material in this example was subjected to more extensive heat-history and is therefore expected to exhibit more fluorescence due to greater occurrence of degradation products. The pelletized material was injection-molded into plaques of 2 in. × 3 in. × 0.125 in. (5.08 cm × 7.62 cm × 3.18 mm) by following standard practice for converting plastic pellets into molded articles. The plaques were placed in TYVEK bags and sterilized by exposure to 30 kGy gamma irradiation.

**Example 2**

Commercially available POLYCARBONATE B was injection-molded into plaques of 2 in. × 3 in. × 0.125 in. (5.08 cm × 7.62 cm × 3.18 mm) by following standard practice for converting plastic pellets into molded articles. The plaques were placed in TYVEK bags and sterilized by exposure to 30 kGy gamma irradiation.

Table I summarizes the results of the above-detailed examples. As will be appreciated by reference to Table I, gamma radiation significantly reduced the fluorescence measured from excitation with 365 nm and 488 nm light in all cases.

**Table I**

| Example | Percent Transmission at 488 nm | Fluorescence | |
|---|---|---|---|
| | | at 365 nm excitation | at 488 nm excitation |
| **Comparison** | | | |
| POLYCARBONATE A | 78.63 | 18258 | 18808 |
| Re-extruded POLYCARBONATE A | 77.30 | 21520 | 26217 |

(continued)

| | | | |
|---|---|---|---|
| **Example 1** | | | |
| POLYCARBONATE A + gamma radiation | 73.46 | 7308 | 19055 |
| Re-extruded POLYCARBONATE A + gamma radiation | 73.16 | 8794 | 26155 |
| **Example 2** | | | |
| POLYCARBONATE B | 86.78 | 7606 | 11412 |
| POLYCARBONATE B+ gamma radiation | 83.81 | 3729 | 10475 |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

Various aspects of the subject matter described herein are set out in the following numbered clauses:

Clause 1: A process comprising irradiating a polycarbonate with gamma radiation at a dosage of at least 30 kGy, wherein the polycarbonate exhibits a decrease in fluorescence measured at excitation wavelengths of between 365 nm to 488 nm in comparison with the polycarbonate not so irradiated, and wherein the polycarbonate retains light transmission properties in the visible light range of 380 nm to 700 nm in comparison with the polycarbonate not so irradiated.

Clause 2: The process according to Clause 1, wherein the polycarbonate comprises A) 50 to 98.5 wt.% of an aromatic polycarbonate, B) 0.1 to 2 wt.% of a polyether polyol, and optionally C) additives.

Clause 3: The process according to one of Clauses 1 and 2, wherein the polycarbonate comprises A) 69.85 wt.% to 98.5 wt.% of an aromatic polycarbonate, B) 0.1 wt.% to 2 wt.% of a polyether polyol and optionally, C) up to 30 wt.% of at least one additive selected from the group consisting of flame retardants, anti dripping agents, impact modifiers, fillers, antistats, coloring agents, pigments, thermal stabilizers different from component B, lubricants and/or demolding agents, UV absorbers, IR absorbers, hydrolysis stabilizers, and compatibilizers.

Clause 4: The process according to any one of Clauses 1 to 3, wherein the polycarbonate comprises A) 93.0 wt.% to 97.5 wt.% of an aromatic polycarbonate, B) 0.5 wt.% to 1 wt.% of a polyether polyol and optionally, C) up to 6 wt.% of at least one additive selected from the group consisting of flame retardants, antidripping agents, impact modifiers, fillers, antistats, coloring agents, pigments, thermal stabilizers different from components B, lubricants and/or demolding agents, UV absorbers, IR absorbers, hydrolysis stabilizers, and compatibilizers.

Clause 5: The process according to any one of Clauses 1 to 4, wherein the dosage is at least 30 kGy to 100 kGy.

Clause 6: An article comprising the polycarbonate produced according to the process of any one of Clauses 1 to 5.

Clause 7: The article according to Clause 6, wherein the article comprises a molded polycarbonate diagnostic component.

Clause 8: The molded polycarbonate diagnostic component according to Clause 7, wherein the component comprises a microfluidic chip.

Clause 9: The molded polycarbonate diagnostic component according to Clause 7, wherein the component comprises a PCR tray.

Clause 10: A process comprising irradiating a polycarbonate with gamma radiation at a dosage of 30 kGy, wherein the polycarbonate exhibits a decrease in fluorescence measured at excitation wavelengths of between 365 nm to 488 nm in comparison with the polycarbonate not so irradiated, wherein the polycarbonate retains light transmission properties in the visible light range of from 380nm to 700 nm in comparison with the polycarbonate not so irradiated, and wherein the polycarbonate comprises A) 50 to 98.5 wt.% of an aromatic polycarbonate, B) 0.1 to 2 wt.% of a polyether polyol, and optionally C) additives.

**Claims**

**1.** A process comprising irradiating a polycarbonate with gamma radiation at a dosage of at least 30 kGy,

wherein the polycarbonate exhibits a decrease in fluorescence measured at excitation wavelengths of between 365 nm to 488 nm in comparison with the polycarbonate not so irradiated, and
wherein the polycarbonate retains light transmission properties in a light range of 380 nm to 700 nm in comparison with the polycarbonate not so irradiated.

**2.** The process according to claim 1, wherein the polycarbonate comprises A) 50 to 98.5 wt.% of an aromatic polycarbonate, B) 0.1 to 2 wt.% of a polyether polyol, and optionally C) additives.

**3.** The process according to one of claims 1 and 2, wherein the polycarbonate comprises A) 69.85 wt.% to 98.5 wt.% of an aromatic polycarbonate, B) 0.1 wt.% to 2 wt.% of a polyether polyol and optionally, C) up to 30 wt.% of at least one additive selected from the group consisting of flame retardants, antidripping agents, impact modifiers, fillers, antistats, coloring agents, pigments, thermal stabilizers different from component B, lubricants and/or demolding agents, UV absorbers, IR absorbers, hydrolysis stabilizers, and compatibilizers.

**4.** The process according to any one of claims 1 to 3, wherein the polycarbonate comprises A) 93.0 wt.% to 97.5 wt.% of an aromatic polycarbonate, B) 0.5 wt.% to 1 wt.% of a polyether polyol and optionally, C) up to 6 wt.% of at least one additive selected from the group consisting of flame retardants, antidripping agents, impact modifiers, fillers, antistats, coloring agents, pigments, thermal stabilizers different from components B, lubricants and/or demolding agents, UV absorbers, IR absorbers, hydrolysis stabilizers, and compatibilizers.

**5.** The process according to any one of claims 1 to 4, wherein the dosage is at least 30 kGy to 100 kGy.

**6.** An article comprising the polycarbonate produced according to the process of any one of claims 1 to 5.

**7.** The article according to claim 6, wherein the article comprises a molded polycarbonate diagnostic component.

**8.** The molded polycarbonate diagnostic component according to claim 7, wherein the component comprises a microfluidic chip.

**9.** The molded polycarbonate diagnostic component according to claim 7, wherein the component comprises a PCR tray.

**10.** A process comprising irradiating a polycarbonate with gamma radiation at a dosage of 30 kGy,

wherein the polycarbonate exhibits a decrease in fluorescence measured at excitation wavelengths of between 365 nm to 488 nm in comparison with the polycarbonate not so irradiated,
wherein the polycarbonate retains light transmission properties in a light range of from 380 nm to 700 nm in comparison with the polycarbonate not so irradiated, and
wherein the polycarbonate comprises A) 50 to 98.5 wt.% of an aromatic polycarbonate, B) 0.1 to 2 wt.% of a polyether polyol, and optionally C) additives.

Europäisches Patentamt
European Patent Office
Office européen des brevets

# EUROPEAN SEARCH REPORT

Application Number
EP 22 17 6197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/179845 A1 (WANDNER DERK ERICH [DE] ET AL) 17 June 2021 (2021-06-17)<br>* table 2a and 2b *<br>----- | 1-10 | INV.<br>C08G64/40<br>C08J3/28 |
| X | US 2007/117957 A1 (MULLEN BRIAN [US]) 24 May 2007 (2007-05-24)<br>* table 2 *<br>----- | 1,5-7 | |
| X | ALIEV R ET AL: "RADIATION CROSSLINKING OF BISPHENOL-A POLYCARBONATE IN THE PRESENCEOF BISPHENOL-A DIMETHACRYLATE AND TRIALLYL CYANURATE",<br>POLYMER BULLETIN, SPRINGER, HEIDELBERG, DE,<br>vol. 45, no. 2,<br>1 September 2000 (2000-09-01), pages 167-174, XP000977409,<br>ISSN: 0170-0839, DOI: 10.1007/S002890070045<br>* figure 2 *<br>----- | 1,5,6 | |
| | | | TECHNICAL FIELDS SEARCHED (IPC) |
| | | | C08G<br>C08J |

The present search report has been drawn up for all claims

1

| Place of search | Date of completion of the search | Examiner |
|---|---|---|
| The Hague | 23 September 2022 | Hoffmann, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 17 6197

This annex lists the patent family members relating to the patent documents cited in the above-mentioned European search report. The members are as contained in the European Patent Office EDP file on
The European Patent Office is in no way liable for these particulars which are merely given for the purpose of information.

23-09-2022

| Patent document cited in search report | Publication date | Patent family member(s) | Publication date |
|---|---|---|---|
| US 2021179845 A1 | 17-06-2021 | CN 112020540 A | 01-12-2020 |
| | | EP 3781630 A1 | 24-02-2021 |
| | | JP 2021531356 A | 18-11-2021 |
| | | KR 20200143388 A | 23-12-2020 |
| | | US 2021179845 A1 | 17-06-2021 |
| | | WO 2019201816 A1 | 24-10-2019 |
| US 2007117957 A1 | 24-05-2007 | EP 1948712 A2 | 30-07-2008 |
| | | JP 2009516059 A | 16-04-2009 |
| | | KR 20080071992 A | 05-08-2008 |
| | | US 2007117957 A1 | 24-05-2007 |
| | | WO 2007061672 A2 | 31-05-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7524464 B
- US 7976795 B
- US 8075854 B
- US 8221700 B
- US 5097002 A
- US 5340905 A
- US 5717057 A
- US 6596840 B
- US 6740730 B
- US 7071284 B
- US 2991273 A
- US 2999835 A
- US 2999846 A
- US 3148172 A
- US 3271367 A
- US 4982014 A
- DE 2036052 A
- DE 3832396 A
- FR 1561518 A1
- GB 1122003 A
- GB 1229482 A
- GB 1341318 A
- GB 1367790 A
- US 5288778 A
- US 5821380 A
- US 5883165 A
- US 7074351 B
- US 7169834 B
- US 8153239 B
- US 20050165148 A
- US 8716007 B
- US 8831887 B
- US 10280392 B
- US 10436713 B
- US 11235333 B


### Non-patent literature cited in the description


- **A. PIRUSKA ; I. NIKCEVIC ; S. H. LEE ; C. AHN ; W. R. HEINEMAN ; P. A. LIMBACH ; C. J. SELISKAR.** *Lab Chip,* 2005, vol. 5, 1348-1354
- **I. B. RUFUS ; H. SHAH ; C. E. HOYLE.** *J. App. Polym. Sci.,* 1994, vol. 51, 1549-1588
- **H. ITAGAKI.** *J. Photopol. Sci. Tech.,* 1993, vol. 6, 101-104
- Chemistry and Physics of Polycarbonates. **SCHNELL.** Polymer Review. Interscience Publishers, 1964, vol. 9
- **D. FREITAG ; U. GRIGO ; P.R. MÜLLER ; H. NOUVERTNÉ ; BAYER AG.** Polycarbonates. *Encyclopedia of Polymer Science and Engineering,* 1988, vol. 11, 648-718
- Polycarbonate. **U. GRIGO ; K. KIRCHNER ; P.R. MÜLLER.** Polycarbonates. Becker/Braun, vol. 3,1
- Polycarbonate, Polyacetale, Polyester, Celluloseester [Polycarbonates, Polyacetals, Polyesters, Cellulose Esters. Carl Hanser Verlag, 1992, 117-299
- **H. SCHNELL.** Chemistry and Physics of Polycarbonates. Interscience Publishers, 1964, 28, , 102
- **D.G. LEGRAND ; J.T. BENDLER.** Handbook of Polycarbonate Science and Technology. Marcel Dekker, 2000, 72
- **HANS ZWEIFEL.** Plastics Additives Handbook. Hanser Verlag, 2000
- *CHEMICAL ABSTRACTS,* 13676-91-0
- *CHEMICAL ABSTRACTS,* 116-75-6
- *CHEMICAL ABSTRACTS,* 147-14-8
- *CHEMICAL ABSTRACTS,* 1328-53-6
- *CHEMICAL ABSTRACTS,* 23949-66-8
- **SCOTT, S.M. ; ALI, Z.** Fabrication Methods for Microfluidic Devices: An Overview. *Micromachines,* 2021, vol. 12, 319, https://doi.org/10.3390/mi12030319
- *Materials for microfluidic chips fabrication _ a review 2017 - Elveflow, https://www.elveflow.com/microfluidic-reviews/general-microfluidics/materials-for-microfluidic-chips-fabrication-a-review-2017/*